(19) Europäisches Patentamt
European Patent Office
Office européen des brevets

(11) EP 3 151 390 A1

(12) EUROPÄISCHE PATENTANMELDUNG

(43) Veröffentlichungstag:
05.04.2017  Patentblatt 2017/14

(51) Int Cl.:
H02K 5/08 (2006.01)          H02K 11/40 (2016.01)
H02K 7/18 (2006.01)

(21) Anmeldenummer: 15188155.4

(22) Anmeldetag: 02.10.2015

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA

(71) Anmelder: Siemens Aktiengesellschaft
80333 München (DE)

(72) Erfinder: Cepek, Thomas
12487 Berlin (DE)

(54) **ELEKTRISCHE ROTIERENDE MASCHINE MIT FLÄCHEN UNTERSCHIEDLICHER ELEKTRISCHER POTENTIALE**

(57)    Die Erfindung betrifft eine elektrische rotierende Maschine (1) aufweisend mindestens eine erste Potentialfläche (10) und eine zweite Potentialfläche (11), wobei die erste Potentialfläche (10) und die zweite Potentialfläche (11), zumindest lokal, unterschiedliche elektrische Potentiale aufweisen. Um, im Vergleich zum Stand der Technik, eine einfachere Montage und Wartung zu gewährleisten sowie Kosten in der Herstellung zu sparen, wird vorgeschlagen die erste Potentialfläche (10) und die zweite Potentialfläche (11) durch mindestens einen elektrisch nicht leitfähigen Abstandshalter (8) mechanisch zu verbinden, wobei der Abstandshalter (8) einen Abstand (9) zwischen der ersten Potentialfläche (10) und der zweiten Potentialfläche (11) herstellt und dafür vorgesehen ist, einen Potentialausgleich zwischen der ersten Potentialfläche (10) und der zweiten Potentialfläche (11) zu verhindern.

FIG 2

**Beschreibung**

Die Erfindung betrifft eine elektrische rotierende Maschine aufweisend mindestens eine erste Potentialfläche und eine zweite Potentialfläche, wobei die erste Potentialfläche und die zweite Potentialfläche, zumindest lokal, unterschiedliche elektrische Potentiale aufweisen.

Eine derartige elektrische rotierende Maschine, bevorzugt ein Motor oder Generator, welcher beispielsweise eine Leistungsaufnahme von mehr als zehn Megawatt und eine Drehzahl von 1000 bis 20000 U/min aufweist, kommt neben anderem in industriellen Anlagen vor. Beim Betrieb einer derartigen elektrischen rotierenden Maschine kann es beispielsweise durch das Wechselfeld des Stators zur Ausprägung unterschiedlicher elektrischer Potentiale in oder auf unterschiedlichen Bauteilen kommen. Beispielsweise können Teile eines Gehäuses, welches bevorzugt die elektrische rotierende Maschine zumindest teilweise umgibt, auf unterschiedlichen Potentialen liegen. Bisher wurden derartige Bauteile, welche voneinander elektrisch isoliert sind und, insbesondere im Betrieb, auf unterschiedlichen Potentialen liegen können, durch sogenannte Potentialausgleichsbänder miteinander verbunden, welche durch eine lokale elektrisch leitfähige Verbindung einen Potentialausgleich zwischen den Bauteilen sicherstellen. Die Potentialausgleichsbänder werden dabei vorzugsweise auf Potentialausgleichsklötze montiert, welche zuvor auf die zu verbindenden Bauteile geschweißt wurden, um eine bessere elektrische Kontaktierung zu gewährleisten. Der Abstand der Potentialausgleichsbänder darf ein bestimmtes Maß nicht überschreiten. Insbesondere bei großen Maschinen mit einer Leistung von mehr als zehn Megawatt ist eine große Anzahl an Potentialausgleichsbändern erforderlich.

Der Erfindung liegt die Aufgabe zugrunde, eine elektrische rotierende Maschine der eingangs genannten Art anzugeben, welche, im Vergleich zum Stand der Technik, einfacher zu montieren und zu warten sowie kostengünstig herzustellen ist.

Diese Aufgabe wird durch eine elektrische rotierende Maschine der eingangs genannten Art dadurch gelöst, dass die erste Potentialfläche und die zweite Potentialfläche durch mindestens einen elektrisch nicht leitfähigen Abstandshalter mechanisch verbunden sind, wobei der Abstandshalter einen Abstand zwischen der ersten Potentialfläche und der zweiten Potentialfläche herstellt und dafür vorgesehen ist, einen Potentialausgleich zwischen der ersten Potentialfläche und der zweiten Potentialfläche zu verhindern.

Es können auch mehr als zwei Potentialflächen durch derartige Abstandshalter mechanisch miteinander verbunden werden. Die elektrisch nicht leitfähigen Abstandshalter bestehen bevorzugt aus einem Isolationsmaterial. Durch den Abstand zwischen der ersten Potentialfläche und der zweiten Potentialfläche, welcher durch einen derartigen Abstandshalter hergestellten wird, wird verhindert, dass es zu einem Potentialausgleich zwischen der ersten Potentialfläche und der zweiten Potentialfläche kommt. Ein Potentialausgleich äußert sich beispielsweise in einem Spannungsüberschlag und/oder einer Funkenstrecke. Die Verwendung elektrisch nicht leitfähiger Abstandshalter zur Verhinderung eines Potentialausgleichs zwischen der ersten Potentialfläche und der zweiten Potentialfläche ist vorteilhaft, da die bisher verwendeten teuren Potentialausgleichbänder sowie das Anschweißen der Potentialausgleichsklötze eingespart werden können. Dies führt zu einer Kostenersparnis. Weiterhin werden die Montage und die Wartung vereinfacht, da die Potentialausgleichsbänder nicht montiert und im Wartungsfall wieder demontiert werden müssen.

Bevorzugt ist der Abstand zwischen der ersten Potentialfläche und der zweiten Potentialfläche minimal gehalten. Ein minimaler Abstand, welcher auch Mindestabstand genannt werden kann, wird bevorzugt nach dem Paschen-Gesetz berechnet. Das Paschen-Gesetz besagt, dass in einem homogenen Feld die Durchschlagspannung eine Funktion des Produktes aus Gasdruck und Schlagweite ist. Mit Hilfe einer Gleichung, welche von John Sealy Townsend erstmals hergeleitet wurde, lässt sich für eine gegebene maximal auftretende Spannung bei einem gegebenen Druck der minimal erforderliche Abstand der der ersten Potentialfläche und der zweiten Potentialfläch berechnen. Dies ist besonders vorteilhaft, da durch eine derartige Berechnung die Zuverlässigkeit der Anordnung steigt und durch die Ermittlung des minimalen Abstandes Materialkosten eingespart werden.

In einer bevorzugten Ausführung weist der elektrisch nicht leitfähige Abstandshalter ein Material mit hoher Durchschlagsfestigkeit auf. Unter der Durchschlagsfestigkeit versteht man diejenige elektrische Feldstärke, welche in einem nicht leitfähigen Material höchstens herrschen darf, ohne dass es zu einem Spannungsdurchschlag kommt. Bevorzugt weist der Abstandshalter ein Material auf, welches eine geringe elektrische Leitfähigkeit und eine hohe Durchschlagsfestigkeit aufweist. Durch ein Material mit hoher Durchschlagsfestigkeit wird die Sicherheit der elektrischen rotierenden Maschine verbessert.

Auf besonders vorteilhafte Weise weist der elektrisch nicht leitfähige Abstandshalter einen Kunststoff und/oder eine Keramik auf. Als keramische Werkstoffe kommen beispielsweise Porzellan oder Aluminumoxid in Frage. Kunststoffe sind beispielsweise Polycarbonate, Polyester, Polypropylen, Polyethylenterephthalat (PET), Polyvinylchlorid (PVC) oder Polyoxymethylen. Dies ist besonders vorteilhaft, da Kunststoffe und Keramiken eine hohe Durchschlagsfestigkeit und eine geringe elektrische Leitfähigkeit aufweisen.

Bei einer weiteren vorteilhaften Ausgestaltung weisen die erste Potentialfläche und die zweite Potentialfläche ein elektrisch leitfähiges Material, insbesondere ein Metall, auf. Die elektrische Leitfähigkeit ist bevorzugt höher als $10 \cdot 10^6$ S/m. Daraus ergibt sich eine homogene Potentialverteilung auf den Potentialflächen.

In einer bevorzugten Ausführung weisen die erste Potentialfläche und/oder die zweite Potentialfläche eine elektrisch isolierende Beschichtung auf. Dies ist vorteilhaft, da durch eine elektrisch isolierende Beschichtung die Sicherheit der elektrischen rotierenden Maschine verbessert wird.

Bevorzugt ist die erste Potentialfläche zumindest als Teil eines Gehäuseunterteils und/oder eines Grundgestells ausgebildet. Das Gehäuseunterteil und/oder das Grundgestell sind beispielsweise dafür vorgesehen, die elektrische rotierende Maschine zu tragen und die elektrische rotierende Maschine vorzugsweise mit einem Fundament zu verbinden. Dies ist besonders vorteilhaft, da einfacher zu montieren und kostengünstig herzustellen ist.

Bei einer weiteren vorteilhaften Ausgestaltung ist die zweite Potentialfläche zumindest als Teil eines Gehäuseoberteils und/oder einer Haube ausgebildet. Dies gewährleistet eine einfachere Montage und ist kostengünstig herzustellen.

In besonders vorteilhafter Weise bilden das Gehäuseunterteil und das Gehäuseoberteil ein Gehäuse. Dies ist vorteilhaft, da beispielsweise zusätzliche Gehäusekomponenten eingespart werden können wodurch Kosten gespart werden können.

In einer bevorzugten Ausführungsform ist zumindest eine Potentialfläche über mindestens eine erste Verbindung an ein Massepotential angeschlossen. Beispielsweise ist eine erste Potentialfläche an ein Massepotential angeschlossen. Dadurch die Verhinderung eines Potentialunterschieds zwischen der exemplarisch ersten Potentialfläche und dem Massepotential wird einem Potentialausgleich, welcher sich beispielsweise in einem Spannungsüberschlag und/oder einer Funkenstrecke äußert, vorgebeugt.

Bevorzugt sind die erste Potentialfläche und die zweite Potentialfläche über mindestens eine zweite Verbindung elektrisch leitend verbunden. Die beiden Potentialflächen liegen durch die elektrisch leitende zweite Verbindung demnach global auf demselben elektrischen Potential. Durch die Abstandshalter muss demnach nur noch ein Potentialausgleich welcher aufgrund lokaler Potentialunterschiede entsteht, verhindert werden. Da ein derartiger lokaler Potentialunterschied vorzugsweise geringer ist als ein globaler Potentialunterschied. Demnach kann beispielsweise der Abstand zwischen der ersten Potentialfläche und der zweiten Potentialfläche aufgrund eines geringeren Potentialunterschieds kleiner gewählt werden.

Im Folgenden wird die Erfindung anhand der in den Figuren dargestellten Ausführungsbeispiele näher beschrieben und erläutert.

Es zeigen:

FIG 1 einen dreidimensionalen Ausschnitt einer elektrischen rotierenden Maschine bei der zwei Potentialflächen durch Potentialausgleichsbänder elektrisch leitend verbunden sind,

FIG 2 einen dreidimensionalen Ausschnitt einer elektrischen rotierenden Maschine bei der zwei Potentialflächen durch elektrisch nicht leitfähigen Abstandshalter mechanisch verbunden sind,

FIG 3 einen Querschnitt eines Teils einer elektrischen rotierenden Maschine bei der zwei Potentialflächen durch elektrisch nicht leitfähigen Abstandshalter mechanisch verbunden sind und

FIG 4 einen Querschnitt durch eine elektrische rotierende Maschine bei der zwei Potentialflächen durch elektrisch nicht leitfähigen Abstandshalter mechanisch verbunden sind.

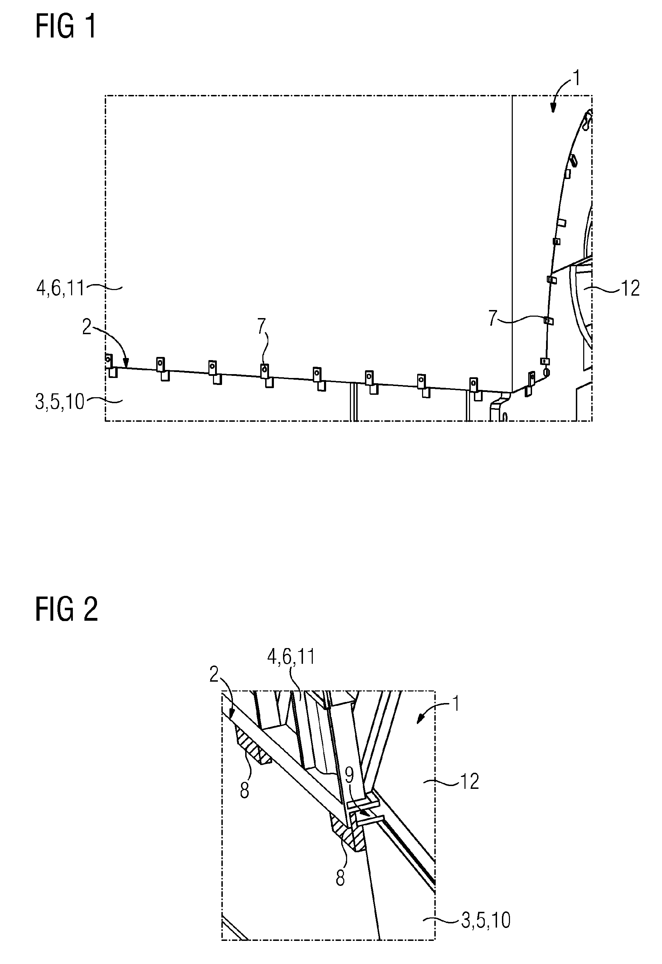

FIG 1 zeigt einen dreidimensionalen Ausschnitt einer elektrischen rotierenden Maschine 1 bei der zwei Potentialflächen 10, 11 durch Potentialausgleichsbänder 7 elektrisch leitend verbunden sind. Bei der dargestellten elektrischen rotierenden Maschine 1 handelt es sich um einen Motor, welcher eine Leistungsaufnahme von mindestens zehn Megawatt und eine Drehzahl von 1000 bis 20000 U/min aufweist und bevorzugt in industriellen Anlagen eingesetzt wird. Der Motor weist einen Stator 12 auf, welcher von einem Gehäuse 2 umhüllt ist. Das Gehäuse 2 weist ein Gehäuseoberteil 4 und ein Gehäuseunterteil 3 auf, wobei das Gehäuseoberteil 4 als Haube 6 und das Gehäuseunterteil 3 als Grundgestell 5 ausgeführt sind. Die Haube 6 und das Grundgestell 5 bilden in diesem Fall das Gehäuse 2 und umschließen die elektrische rotierende Maschine 1 und weitere Komponenten, wie beispielsweise Lager, welche aus Gründen der Übersichtlichkeit nicht dargestellt sind. Das Grundgestell 5 trägt die elektrische rotierende Maschine 1 und ist mit einem, in FIG 1 aus Gründen der Übersichtlichkeit nicht dargestellten, Fundament 17 verankert. Das als Grundgestell 5 ausgeführte Gehäuseunterteil 3 weist eine erste Potentialfläche 10 auf. Das als Haube 6 ausgeführte Gehäuseoberteil 4 weist eine zweite Potentialfläche 11 auf.

Beim Betrieb einer derartigen elektrischen rotierenden Maschine 1 kann es unter anderem durch das Wechselfeld des Stators 12 zur Ausprägung unterschiedlicher elektrischer Potentiale beispielsweise zwischen der ersten Potentialfläche 10 und der zweiten Potentialfläche 11 kommen. Daher werden die erste Potentialfläche 10 und die zweiten Potentialfläche 11 des Gehäuses 2, welche insbesondere im Betrieb auf unterschiedlichen Potentialen liegen, durch sogenannte Potentialausgleichsbänder 7 elektrisch leitend miteinander verbunden. Die Potentialausgleichsbänder 7 bestehen aus einem gut elektrisch leitfähigen Metall wie beispielsweise Kupfer. Durch die Potentialausgleichsbänder 7 wird eine elektrisch leitfähige Verbindung hergestellt, welche für einen Potentialausgleich zwischen der ersten Potentialfläche 10 und der zweiten Potentialfläche 11 sorgt. Sollte eine Potentialdifferenz zwischen der ersten Potentialfläche 10 und der zweiten Potentialfläche 11 bestehen so fließt ein Ausgleichsstrom über die Potentialausgleichsbänder 7, sodass sich unterschiedlichen Potentiale auf den Potentialflächen 10, 11 ausgleichen.

Die Potentialausgleichsbänder 7 werden dabei vorzugsweise auf Potentialausgleichsklötze montiert, welche zuvor auf die zu verbindenden Bauteile geschweißt wurden, um eine bessere elektrische Kontaktierung zu gewährleisten. Die Kontaktierung kann über Schrauben, Schweißen oder eine andere geeignete Befestigungsmethode erfolgen. Der Abstand der Potentialausgleichsbänder 7 darf ein bestimmtes Maß nicht überschreiten, um lokale Potentialdifferenzen zu vermeiden. Insbesondere bei einer großen elektrischen rotierenden Maschine 1 mit einer Leistung von mindestens zehn Megawatt ist eine große Anzahl an Potentialausgleichsbändern 7 erforderlich, um einen ganzheitlichen Potentialausgleich über die gesamten Potentialflächen 10, 11 zu gewährleisten.

FIG 2 zeigt einen dreidimensionalen Ausschnitt einer elektrischen rotierenden Maschine 1, bei der zwei Potentialflächen 10, 11 durch elektrisch nicht leitfähigen Abstandshalter 8 mechanisch verbunden sind. Bei der dargestellten elektrischen rotierenden Maschine 1 handelt es sich, wie in FIG 1, um einen Motor, welcher eine Leistungsaufnahme von mindestens zehn Megawatt und eine Drehzahl von 1000 bis 20000 U/min aufweist und bevorzugt in industriellen Anlagen eingesetzt wird. Der Gegenstand der Patentanmeldung lässt sich aber auch auf Generatoren und auf, im Vergleich zum dargestellten Motor, kleinere Motoren übertragen. Die in FIG 2 dargestellte elektrische rotierende Maschine 1 weist einen Stator 12 auf, welcher von einem Gehäuse 2 umschlossen ist. Das Gehäuse 2 weist, wie in FIG 1 dargestellt, ein Gehäuseoberteil 4 und ein Gehäuseunterteil 3 auf, wobei das Gehäuseoberteil 4 als Haube 6 und das Gehäuseunterteil 3 als Grundgestell 5 ausgeführt sind. Das Grundgestell 5 weist eine erste Potentialfläche 10 auf. Die Haube 6 weist eine zweite Potentialfläche 11 auf.

Die erste Potentialfläche 10 und die zweite Potentialfläche 11 sind durch mehrere elektrisch nicht leitfähige Abstandshalter 8 mechanisch miteinander verbunden. Während das als Grundgestell 5 ausgeführte Gehäuseunterteil 3 zumindest Teile des Stators 12 trägt, liegt das als Haube 6 ausgeführte Gehäuseoberteil 4 über die elektrisch isolierenden Abstandshalter 8 auf dem als Grundgestell 5 ausgeführten Gehäuseunterteil 3 auf und trägt dieses zumindest teilweise. Der Abstandshalter 8 stellt einen Abstand 9 zwischen der ersten Potentialfläche 10 und der zweiten Potentialfläche 11 her. Sowohl das Grundgestell 5 als auch die Haube 6 können mehrere Potentialflächen aufweisen, welche durch mehrere elektrisch nicht leitfähige Abstandshalter 8 mechanisch miteinander verbunden und auf Abstand 9 gehalten werden. Eine Übertragung auf andere Komponenten in der elektrischen rotierenden Maschine 1, welche verschiedene Potentiale aufweisen ist ebenfalls Gegenstand der Erfindung.

Kommt es, wie in FIG 1 beschrieben, zumindest lokal zur Ausprägung unterschiedlicher elektrischer Potentiale zwischen der ersten Potentialfläche 10 und der zweiten Potentialfläche 11, so wird durch den Abstand 9 ein Potentialausgleich, welcher sich beispielsweise in einem Spannungsüberschlag und/oder einer Funkenstrecke äußert, zwischen der ersten Potentialfläche 10 und der zweiten Potentialfläche 11 verhindert.

Der minimale Abstand 9, welcher erforderlich ist, um einen Potentialausgleich zwischen der ersten Potentialfläche 10 und der zweiten Potentialfläche 11 zu verhindern, wird bevorzugt nach dem Paschen-Gesetz berechnet. Das Paschen-Gesetz besagt, dass in einem homogenen Feld die Durchschlagspannung eine Funktion des Produktes aus Gasdruck und Schlagweite ist. Mit Hilfe einer Gleichung, welche von John Sealy Townsend erstmals hergeleitet wurde, lässt sich für eine gegebene maximal auftretende Spannung bei einem gegebenen Druck der minimal erforderliche Abstand der der ersten Potentialfläche und der zweiten Potentialfläch berechnen:

$$U_d = \frac{B}{\ln(A \cdot p \cdot d) - \ln[\ln(1 + \gamma^{-1})]} \cdot p \cdot d$$

$U_d$ ist hierbei die Durchschlagspannung im homogenen Feld, der Gasdruck wird mit p, der Elektrodenabstand mit d abgekürzt. A und B sind durch Durchschlagsversuche empirisch ermittelte druckabhängige, feldstärkeabhängige und materialabhängige Konstanten und γ ist eine Materialkonstante, die angibt, wie viele Elektronen pro Ion freigesetzt werden. Ist beispielsweise die Spannungsdifferenz zwischen den Potentialflächen 10, 11 bekannt, so kann der minimale Abstand 9, welcher größer sein muss als der in obiger Gleichung zu berechnende Elektrodenabstand, zumindest näherungsweise berechnet werden.

Der isolierend ausgeführte Abstandshalter 8 besteht aus einem Material, welches eine geringe elektrische Leitfähigkeit und eine hohe Durchschlagsfestigkeit aufweist. Unter der Durchschlagsfestigkeit versteht man hierbei diejenige elektrische Feldstärke, welche in einem nicht leitfähigen Material höchstens herrschen darf, ohne dass es zu einem Spannungsdurchschlag kommt. Der Abstandshalter 8 besteht daher aus einem elektrisch nicht leitfähigen Kunststoff und/oder einer Keramik, um sowohl eine hohe Durchschlagsfestigkeit als auch eine hohe Isolation, was einer geringen elektrischen Leitfähigkeit entspricht, zu erreichen. Als keramische Werkstoffe kommen Porzellan oder Aluminiumoxid in Frage. Kunststoffe sind beispielsweise Polycarbonate, Polyester, Polypropylen, Polyethylenterephthalat (PET), Polyvinylchlorid (PVC) oder Polyoxymethylen.

Die Potentialflächen 10, 11 weisen bevorzugt ein elektrisch leitfähiges Material, insbesondere ein Metall, auf, um eine homogene Potentialverteilung auf den Potentialflächen zu erreichen. Die elektrische Leitfähigkeit ist bevorzugt höher als 10·10⁶ S/m. Beispielsweise beträgt die elektrische Leitfähigkeit von Kupfer 5,8·10⁷ S/m, die die elektrische Leitfähigkeit von Eisen 10,02·10⁶ S/m. Da der Abstandshalter 8 zumindest Teile des als Haube 6 ausgeführten Gehäuseoberteils 4 trägt, wird eine mechanische Stabilität des Abstandshalters 8 vorausgesetzt. Diese kann durch ein entsprechend mechanisch stabiles Material, eine entsprechend verstärkende Struktur, beispielsweise Fasern, und/oder eine mechanisch stabile Form erreicht werden.

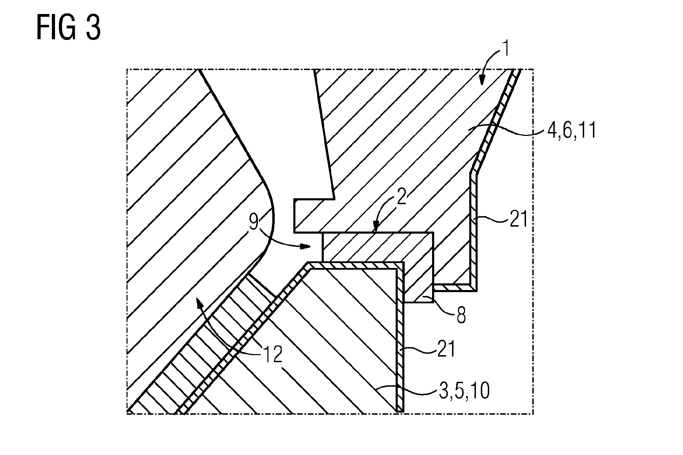

FIG 3 zeigt einen Querschnitt eines Teils einer elektrischen rotierenden Maschine 1 bei der zwei Potentialflächen 10, 11 durch elektrisch nicht leitfähigen Abstandshalter 8 mechanisch verbunden sind. Diese Ausführungsform der elektrischen rotierenden Maschine 1 entspricht im Wesentlichen der Ausführungsform aus FIG 2 und unterscheidet sich dadurch, dass die erste Potentialfläche 10 und die zweite Potentialfläche 11 eine elektrisch isolierende Beschichtung 21 aufweisen. Diese elektrisch isolierende Beschichtung 21 kann unter anderem ein Lack aber auch eine Kunststoff- oder Keramik-Beschichtung sein. Die elektrisch isolierende Beschichtung 21 ist bevorzugt auf der kompletten Oberfläche der Potentialflächen 10, 11 aufgebracht, nicht zugängliche Flächen können beispielsweise aus Kostengründen ausgespart werden. Die elektrisch isolierende Beschichtung 21 erhöht die Betriebssicherheit, da sie dazu beträgt zu vermieden, dass es zu Personenschäden durch elektrischen Schlag bei Berührung des Gehäuses 2 kommt.

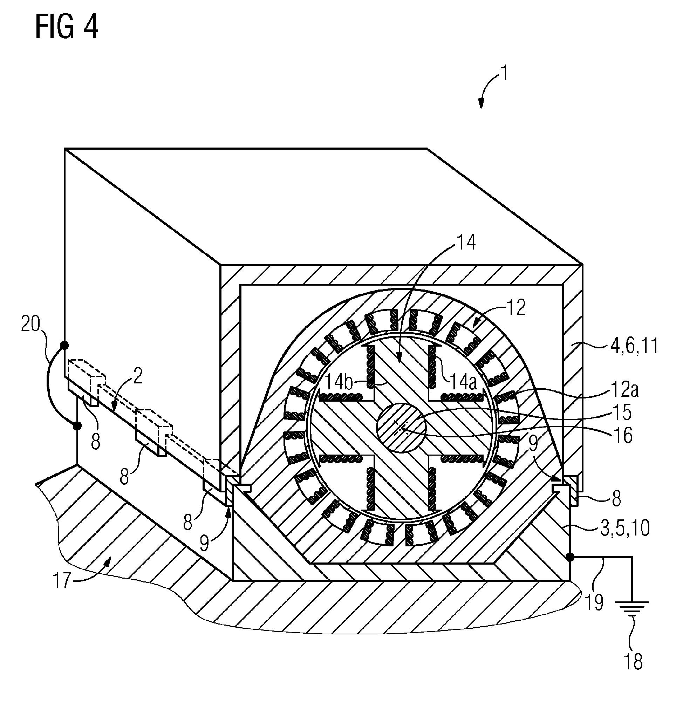

FIG 4 zeigt einen Querschnitt durch eine elektrische rotierende Maschine 1 bei der zwei Potentialflächen 10, 11 durch elektrisch nicht leitfähigen Abstandshalter 8 mechanisch verbunden sind. Die elektrische rotierende Maschine 1 ist exemplarisch als Synchronmaschine ausgeführt und weist einen um eine Rotationsachse 16 drehbaren Rotor 14 und einen den Rotor 14 umgebenden Stator 12 auf. Die Rotationsachse 16 definiert eine axiale Richtung, eine radiale Richtung und eine Umfangsrichtung. Der Rotor 14 der beispielhaft gezeigten vierpoligen Maschine weist Rotorwicklungen 14 und ein Rotorblechpaket 14b sowie eine Welle 15 auf. Der Stator weist Statorwickungen 12a auf, welche ein Drehfeld erzeugen. Der Stator 12 ist mit dem Grundgestell 5 mechanisch, beispielsweise über Schrauben, verbunden, wobei das Grundgestell 5 den Stator 12 trägt. Das Grundgestell 5 ist mit einem Fundament 17, beispielsweise über Schrauben, Bolzen und/oder Anker, mechanisch verbunden. Die weitere Ausführungsform der elektrischen rotierenden Maschine 1 entspricht im Wesentlichen der Ausführungsform aus FIG 2.

Die erste Potentialfläche 10 des Grundgestells 5 ist über eine erste Verbindung 19 an ein Massepotential 18 angeschlossen. Weiterhin sind die erste Potentialfläche 10 des Grundgestells 5 und die zweite Potentialfläche 11 der Haube 6 über eine zweite Verbindung 20 elektrisch leitend miteinander verbunden. Dadurch ist gewährleistet, dass das gesamte Gehäuse 2, welches die elektrische rotierende Maschine 1 umgibt, auf Massepotential 18 liegt und nur lokal auftretende Potentialausgleichseffekte, wie beispielsweise ein Spannungsüberschlag oder eine Funkenstrecke, durch den Abstand 9 verhindert werden müssen, welcher durch die elektrisch nicht leitfähigen Abstandshalter 8 zwischen der ersten Potentialfläche 10 und der zweiten Potentialfläche 11 hergestellt wird. Lokal auftretende Potentialausgleichseffekte werden durch ortsabhängige und möglicherweise zeitabhängige Potentialdifferenzen verursacht, die beispielsweise vom Drehfeld des Stators 12 verursacht werden. Die Abstandshalter 8 sind in regelmäßigen Abständen entlang der Kanten zwischen der ersten Potentialfläche 10 und der zweiten Potentialfläche 11 angeordnet. Dass das gesamte Gehäuse 2, welches die elektrische rotierende Maschine 1 umgibt, auf Massepotential 18 liegt, trägt dazu bei zu vermeiden, dass es zu Personenschäden durch elektrischen Schlag bei Berührung des Gehäuses 2 kommt.

Zusammenfassend betrifft die Erfindung eine elektrische rotierende Maschine 1 aufweisend mindestens eine erste Potentialfläche 10 und eine zweite Potentialfläche 11, wobei die erste Potentialfläche 10 und die zweite Potentialfläche 11, zumindest lokal, unterschiedliche elektrische Potentiale aufweisen. Um, im Vergleich zum Stand der Technik, eine einfachere Montage und Wartung zu gewährleisten sowie Kosten in der Herstellung zu sparen, wird vorgeschlagen die erste Potentialfläche 10 und die zweite Potentialfläche 11 durch mindestens einen elektrisch nicht leitfähigen Abstandshalter 8 mechanisch zu verbinden, wobei der Abstandshalter 8 einen Abstand 9 zwischen der ersten Potentialfläche 10 und der zweiten Potentialfläche 11 herstellt und dafür vorgesehen ist, einen Potentialausgleich zwischen der ersten Potentialfläche 10 und der zweiten Potentialfläche 11 zu verhindern.

**Patentansprüche**

1. Elektrische rotierende Maschine (1) aufweisend mindestens eine erste Potentialfläche (10) und eine zweite Potentialfläche (11),
   wobei die erste Potentialfläche (10) und die zweite Potentialfläche (11), zumindest lokal, unterschiedliche elektrische Potentiale aufweisen,
   wobei die erste Potentialfläche (10) und die zweite Potentialfläche (11) durch mindestens einen elektrisch nicht leitfähigen Abstandshalter (8) mechanisch verbunden sind,
   wobei der Abstandshalter (8) einen Abstand (9) zwischen der ersten Potentialfläche (10) und der zweiten Potentialfläche (11) herstellt und dafür vorgesehen ist, einen Potentialausgleich zwischen der ersten Potentialfläche (10) und der zweiten Potentialfläche (11) zu verhindern.

2. Elektrische rotierende Maschine (1) nach Anspruch 1,

wobei der Abstand (9) zwischen der ersten Potentialfläche (10) und der zweiten Potentialfläche (11) minimal gehalten ist.

3. Elektrische rotierende Maschine (1) nach einem der Ansprüche 1 oder 2,
wobei der elektrisch nicht leitfähige Abstandshalter (8) ein Material mit hoher Durchschlagsfestigkeit aufweist.

4. Elektrische rotierende Maschine (1) nach Anspruch 3,
wobei der elektrisch nicht leitfähige Abstandshalter (8) einen Kunststoff und/oder eine Keramik aufweist.

5. Elektrische rotierende Maschine (1) nach einem der vorherigen Ansprüche,
wobei die erste Potentialfläche (10) und die zweite Potentialfläche (11) ein elektrisch leitfähiges Material, insbesondere ein Metall, aufweisen.

6. Elektrische rotierende Maschine (1) nach einem der vorherigen Ansprüche,
wobei die erste Potentialfläche (10) und/oder die zweite Potentialfläche (11) eine elektrisch isolierende Beschichtung (21) aufweisen.

7. Elektrische rotierende Maschine (1) nach einem der vorherigen Ansprüche,
wobei die erste Potentialfläche (10) zumindest als Teil eines Gehäuseunterteils (3) und/oder eines Grundgestells (5) ausgebildet ist.

8. Elektrische rotierende Maschine (1) nach Anspruch 7,
wobei die zweite Potentialfläche (11) zumindest als Teil eines Gehäuseoberteils (4) und/oder einer Haube (6) ausgebildet ist.

9. Elektrische rotierende Maschine (1) nach Anspruch 8,
wobei das Gehäuseunterteil (3) und das Gehäuseoberteil (4) ein Gehäuse (2) bilden.

10. Elektrische rotierende Maschine (1) nach einem der vorherigen Ansprüche,
wobei zumindest eine Potentialfläche (10, 11) über mindestens eine erste Verbindung (19) an ein Massepotential (18) angeschlossen ist.

11. Elektrische rotierende Maschine (1) nach einem der vorherigen Ansprüche,
wobei die erste Potentialfläche (10) und die zweite Potentialfläche (11) über mindestens eine zweite Verbindung (20) elektrisch leitend verbunden sind.

FIG 1

4,6,11

2

3,5,10

7

7

1

12

FIG 2

4,6,11

2

1

12

9

8

8

3,5,10

FIG 3

# FIG 4

**Europäisches Patentamt**
**European Patent Office**
**Office européen des brevets**

# EUROPÄISCHER RECHERCHENBERICHT

Nummer der Anmeldung

EP 15 18 8155

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 4 007 388 A (LAWYER JOHN F ET AL) 8. Februar 1977 (1977-02-08) * Abbildungen 1-3 * | 1-11 | INV. H02K5/08 H02K11/40 |
| X | WO 2015/139831 A1 (ZIEHL ABEGG SE [DE]) 24. September 2015 (2015-09-24) * Seite 6 - Seite 8; Abbildung 7 * | 1-10 | ADD. H02K7/18 |
| X | EP 1 289 099 A2 (LUCAS AEROSPACE POWER EQUIP [US]) 5. März 2003 (2003-03-05) * Absatz [0027] - Absatz [0030]; Abbildungen 1,2 * | 1-6,10 | |
| X | EP 2 704 296 A1 (PANASONIC CORP [JP]) 5. März 2014 (2014-03-05) * Abbildung 1 * | 1-5,10, 11 | |

RECHERCHIERTE SACHGEBIETE (IPC)

H02K

Der vorliegende Recherchenbericht wurde für alle Patentansprüche erstellt

| Recherchenort | Abschlußdatum der Recherche | Prüfer |
|---|---|---|
| Den Haag | 10. März 2016 | Kovacsovics, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes Dokument

EPO FORM 1503 03.82 (P04C03)

EP 3 151 390 A1

## ANHANG ZUM EUROPÄISCHEN RECHERCHENBERICHT
## ÜBER DIE EUROPÄISCHE PATENTANMELDUNG NR.

EP 15 18 8155

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-03-2016

| Im Recherchenbericht angeführtes Patentdokument | Datum der Veröffentlichung | Mitglied(er) der Patentfamilie | Datum der Veröffentlichung |
|---|---|---|---|
| US 4007388 A | 08-02-1977 | KEINE | |
| WO 2015139831 A1 | 24-09-2015 | DE 102014004262 A1 | 24-09-2015 |
| | | WO 2015139831 A1 | 24-09-2015 |
| EP 1289099 A2 | 05-03-2003 | EP 1289099 A2 | 05-03-2003 |
| | | US 2003127930 A1 | 10-07-2003 |
| EP 2704296 A1 | 05-03-2014 | CN 102859845 A | 02-01-2013 |
| | | EP 2704296 A1 | 05-03-2014 |
| | | JP 5502822 B2 | 28-05-2014 |
| | | JP 2013066253 A | 11-04-2013 |
| | | WO 2012147244 A1 | 01-11-2012 |

EPO FORM P0461

Für nähere Einzelheiten zu diesem Anhang : siehe Amtsblatt des Europäischen Patentamts, Nr.12/82